# EUROPEAN PATENT SPECIFICATION

(11) **EP 3 075 997 B1**
(45) Date of publication and mention of the grant of the patent: **02.06.2021**
(21) Application number: 15162194.3
(22) Date of filing: 01.04.2015
(51) Int. Cl.: F02F 1/00, G01M 15/08

(54) **ADAPTION OF CYLINDER COMPRESSION RATIO**
ANPASSUNG VON ZYLINDERVERDICHTUNGSRATEN
ADAPTATION DU TAUX DE COMPRESSION DANS UN CYLINDRE

(43) Date of publication of application: 05.10.2016
(73) Proprietor: Caterpillar Energy Solutions GmbH, 68167 Mannheim (DE)
(72) Inventor: Guisasola, Íñigo, 76829 Landau (DE)
(74) Representative: Kramer Barske Schmidtchen Patentanwälte PartG mbB

(56) References cited:
- DE-A1- 4 011 422
- JP-A- H0 842 389
- JP-A- 2003 314 342
- US-A1- 2012 240 883

## Description

### Technical Field

The present disclosure relates to a method for adapting a cylinder compression ratio of a cylinder of an internal combustion engine, and a related internal combustion engine.

### Background

It is generally known that a degree of efficiency of internal combustion engines depends on various factors. One of those factors is the so-called cylinder compression ratio. Said cylinder compression ratio is a value that represents a ratio of a volume of a cylinder combustion chamber from its largest capacity to its smallest capacity. Generally, higher cylinder compression ratios result in higher engine efficiencies, but also increase load conditions of the internal combustion engine. Hence, internal combustion engines are typically designed and optimized for a certain desired cylinder compression ratio, which provides a good compromise between high efficiency and acceptable load conditions and stresses.

However, in practice, it may occur that an actual cylinder compression ratio deviates from a desired cylinder compression ratio. As a result, cylinders of the internal combustion engine may provide a suboptimal output at a suboptimal engine efficiency as the cylinder is not running at the desired cylinder compression ratio for which its design was originally optimized.

Furthermore, it should be noted that above-noted deviations between actual cylinder compression ratios and desired cylinder compression ratios may have a positive or negative sign. Accordingly, in case the actual cylinder compression ratio is higher than desired, load conditions may occur that may be higher than originally expected, and, thus, malfunctions and wear of components of the engine may occur more frequently.

A compression ratio dispersion adjusting ring for internal combustion engines is discloses in JP H08 42389 A, whereby the different adjusting rings differ in their inner diameter, thereby affecting the cylinder capacity.

Further prior art configurations of internal combustion engines relating to the content disclosed herein are disclosed in, for example, DE 40 11 422 A1, JP 2003 314342 A, and US 2012/0240883 A1.

The present disclosure is directed, at least in part, to improving or overcoming one or more aspects of prior systems.

### Summary of the Disclosure

In an aspect, the present disclosure is directed to a method for adapting a cylinder compression ratio of an internal combustion engine. The internal combustion engine may comprise a cylinder, a piston and a cuff-ring for scraping-off deposits from the piston. A volume of the cuff-ring affects the cylinder compression ratio. The method may include providing a value indicative of a desired cylinder compression ratio, arranging the piston in the cylinder. Further, the method may include determining a deviation between the value indicative of the desired cylinder compression ratio and a respective value indicative of an actual cylinder compression ratio of the piston arranged in the cylinder, and selecting the cuff-ring. The cuff-ring is selected from a plurality of cuff-rings, each comprising a scraping edge section configured for contacting deposits on an outer circumferential face of the piston during operation of the internal combustion engine, but differ with respect to a contour, inclination and surface area of an inner circumferential face, and to provide a volume to adapt the actual cylinder compression ratio to reduce the deviation.

In another aspect, an internal combustion engine may comprise a plurality of cylinders, a plurality of pistons, each piston being reciprocatingly arranged in one of the plurality of cylinders, and a plurality of cuff-rings. Each cuff-ring may be arranged in one of the cylinders for scraping-off deposits from the respective piston. A first cuff-ring of the plurality of cuff-rings and a second cuff-ring of the plurality of cuff-rings each may comprise a scraping edge section configured for contacting deposits on an outer circumferential face of the piston during operation of the internal combustion engine, but differ with respect to a contour, inclination and surface area of an inner circumferential face, such that they may be associated with a different three-dimensional shape.

Other features and aspects of this disclosure will be apparent from the following description and the accompanying drawings.

### Brief Description of the Drawings

Fig. 1 is a schematic drawing of a sectional cut through a section of an internal combustion engine;
Fig. 2 is a schematic drawing of a sectional cut through a cuff-ring; and
Figs. 3A to 3G are detailed views of different embodiments of cuff-ring configurations to provide different volumes for adapting an actual cylinder compression ratio.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

As used herein, the term "cylinder compression ratio" is a value that represents a ratio of a volume of a cylinder combustion chamber from its largest capacity to its smallest capacity. In other words, for example in a piston engine, it is the ratio between the volume of the combustion chamber when the piston is at the bottom of its stroke (BDC), and the volume of the combustion chamber when the piston is at the top of its stroke (TDC).

Further, "cylinder clearance volume" is the volume of the combustion chamber when the piston is at TDC. This is the minimum volume of the space at the end of the compression stroke. In literature, the cylinder clearance volume may be also referred to as compression volume.

Still further, "displacement volume" is the volume of the combustion chamber, which is displaced by the piston during travel from BDC to TDC. In other words, "displacement volume" is the difference between the volume of the combustion chamber when the piston is at BDC and the volume of the combustion chamber when the piston is at TDC.

The present disclosure is based in part on the realization that manufacturing and mounting inaccuracies of components of an internal combustion engine may sum up to a degree that considerably affects a cylinder compression ratio of the internal combustion engine. Typically, components of an internal combustion engine such as pistons, cylinders, cylinder heads and cylinder liners are designed to lead to a desired optimal compression ratio based on theoretical calculations. Said desired optimal compression ratio may lead to an optimal performance and/or efficiency of the internal combustion engine. However, in practice, engine components are manufactured and mounted with certain tolerances. Thus, an actual cylinder compression ratio, which is provided by an assembled cylinder during operation, may deviate from a desired or theoretical cylinder compression ratio. Said deviation may lead to a suboptimal engine performance and efficiency.

The present disclosure is further based in part on the realization that different engine cylinders of the same internal combustion engine may have different actual cylinder compression ratios due to cylinder-specific manufacturing and mounting inaccuracies and tolerances. However, it is generally desirable to have equal actual cylinder compression ratios in each engine cylinder, for example, to have equal outputs and uniform load conditions for each engine cylinder.

Herein, a method and a related internal combustion engine are disclosed, which allow to adapt the actual cylinder compression ratio for a single cylinder. Hence, for example, it is possible to individually adapt actual cylinder compression ratios of a number of cylinders independent of one another to reduce the deviation between each individual actual cylinder compression ratio and the (common) desired cylinder compression ratio. For this purpose, the present disclosure proposes to select a cuff-ring, which scrapes-off deposits from a piston, in a specific manner. Particularly, the cuff-ring is not only provided for scraping-off deposits, but also selected to provide a volume for adapting the actual cylinder compression ratio to reduce the deviation. The latter is possible because the cuff-ring basically requires merely a scraping edge for providing the scraping functionality, and, therefore, provides a certain flexibility with regard to its volume. Said volume flexibility is useable to provide and select a cuff-ring for arranging in the cylinder, which has a cuff-ring volume that affects the actual cylinder compression ratio to reduce (or even compensate) the deviation.

Referring now to the drawings for describing exemplary embodiments of the present disclosure.

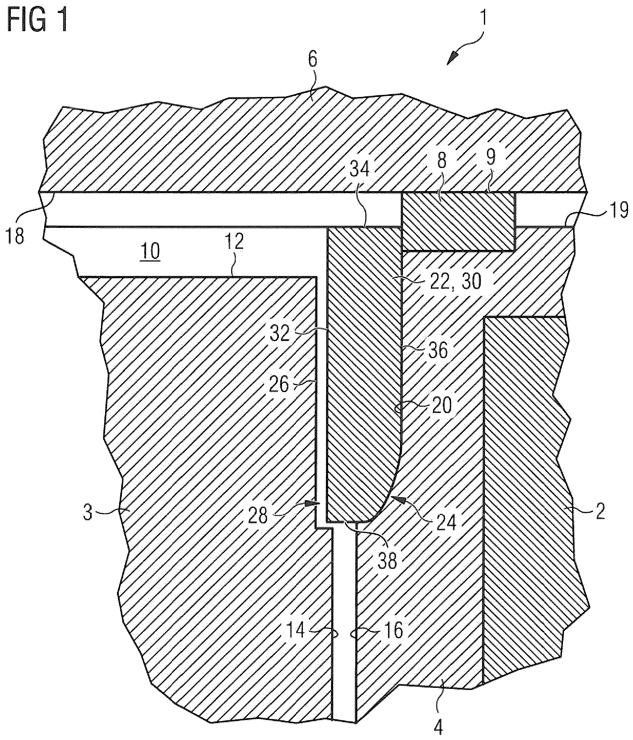

Initially referring to Fig. 1, a sectional view of a section of an internal combustion engine 1 is schematically illustrated. Said internal combustion engine 1 may be any known type of internal combustion engine, having any shape and any number of cylinders.

Internal combustion engine 1 comprises a cylinder 2, a piston 3, and a cylinder head 6 covering cylinder 2 from on top. In the embodiment of Fig. 1, cylinder 2 includes a cylinder liner 4. Alternatively, piston 3 may be directly arranged within cylinder 2 without the presence of a cylinder liner. In those embodiments, features relating to cylinder liner 4 as disclosed herein are likewise provided with the cylinder where applicable.

In the shown embodiment of Fig. 1, piston 3 is arranged to reciprocate in cylinder liner 4 during operation. Therefore, piston 3 is connected via a piston pin (not shown) to a connecting rod (not shown), which in turn is connected to crankshaft (not shown). Further, piston 3 may be provided with annular grooves for installing piston rings to seal between piston 3 and cylinder liner 4.

A piston top or piston crown of piston 3 may have a flat shape as indicated with a flat piston top face 12 in Fig. 1, and/or may include at least one piston cavity or recess, for example, to provide valve pockets or to improve mixing, flow and combustion characteristics.

Piston 3 and cylinder liner 4 are dimensioned such that a clearance is provided between an outer circumferential face 14 of piston 3 and an inner circumferential face 16 of cylinder liner 4 to safely guide piston 3 during its reciprocating movement from TDC to BDC, and vice versa. In some embodiments, inner circumferential face 16 of cylinder liner 4 (or of cylinder 2) may further comprise a surface having a micro-structure adapted to facilitate adhesion of a lubricating film, such as an oil film. For example, cylinder liner 4 may be manufactured from gray cast iron or other cast irons.

Cylinder head 6 is in sealing contact with cylinder liner 4 and/or cylinder 2 using a cylinder head sealing ring (head gasket) 8 that seals-off a gap between a bottom face 18 of cylinder head 6 and a top face 19 of cylinder liner 4 and/or cylinder 2. In the show embodiment, bottom face 18 of cylinder head 6 contacts a head gasket top face 9 of head gasket 8 in an assembled state. Although not shown in further detail, cylinder head 6 may accommodate at least one inlet valve, at least one outlet valve, inlet and outlet gas channel systems and an ignition device as desired.

Cylinder head 6, cylinder liner 4 and piston 3 together define a combustion chamber 10 of cylinder 2. Specifically, combustion chamber 10 is particularly delimited by piston top end face 12, inner circumferential face 16 of cylinder liner 4, and a bottom face 18 of cylinder head 6. Further, combustion chamber 10 is variable volume, which is smallest if piston 3 is at TDC, and which is largest if piston 3 is at BDC.

As illustrated in Fig. 1, in an upper section of cylinder liner 4, a liner recess 20 is formed for receiving and accommodating a cuff-ring 22. In some embodiments, liner recess 20 and/or cuff-ring 22 may comprise a fillet region 24, for example, an arcuate fillet having one or more radii for reducing tension in cylinder liner 4. Cuff-rings are also known as fire rings, flame rings, carbon scraping rings, scraping rings or anti-polishing rings.

Alternatively, for example in embodiments without any cylinder liner, cuff-ring 22 may be arranged in a recess formed in an inner circumferential face of cylinder 2.

In an assembled state, cuff-ring 22 is arranged to scrape-off deposits such as soot accumulating on an upper section of outer circumferential face 14 of piston 3. For preventing that deposits at the upper section of outer circumferential face 14 of piston 3 immediately come into contact with inner circumferential face 16 of cylinder liner 4, piston 3 may include an annular recess 26 in a piston crown section as schematically indicated in Fig. 1. Furthermore, said recess 26 may facilitate to scrape-off deposits more easily.

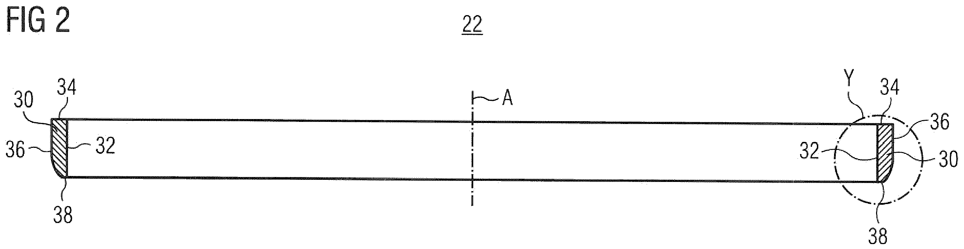

In the following, cuff-ring 22 is described in detail under specific reference to Figs. 1 and 2.

Cuff-ring 22 includes an annular cuff-ring body 30 that circumferentially extends about a cuff-ring axis A (see Fig. 2). Cuff-ring body 30 is delimited by circumferential faces, for example, an inner circumferential face 32, a top circumferential face 34, an outer circumferential face 36, and a bottom circumferential face 38 as depicted in Figs. 1 and 2. In an assembled state, inner circumferential face 32 faces piston 3 in a TDC position as shown in Fig. 1, and top face 34 is directed to cylinder head 6. Both inner circumferential face 32 and top circumferential face 34 are directed to combustion chamber 10 of cylinder 2, and, therefore, partially enclose (limit) combustion chamber 10. Furthermore, outer circumferential face 36 and bottom circumferential face 38 of cuff-ring body 30 contact liner recess 20 of cylinder liner 4.

For example, cuff-ring 22 may be manufactured from the same or different materials as cylinder liner 4 and/or cylinder 2 such as gray cast iron or other cast irons. Moreover, cuff-ring 22 may be press-fitted in liner recess 20 in an assembled state.

Above-noted scraping effect of cuff-ring 22 is mainly achieved by a scraping edge section 28 of cuff-ring 22, which comes into contact with deposits on outer circumferential face 14 during travel of piston 3. In the exemplary embodiment shown in Figs. 1 and 2, scraping edge 28 is situated in a transition region between inner circumferential face 32 and bottom circumferential face 38. Additionally or alternatively, a scraping edge or face may be provided at any other location on inner circumferential face 32 of cuff-ring 22.

In the following, the method for adapting the cylinder compression ratio, for example of cylinder 2, is explained.

The method includes providing a value indicative of a desired cylinder compression ratio. Said desired cylinder compression ratio may be a theoretical optimum, for which cylinder 2 and/or internal combustion engine 1 is designed.

Additionally or alternatively, the desired cylinder compression ratio may be a common desired compression ratio for a plurality of cylinders of the internal combustion engine. By providing a common desired cylinder compression ratio for all cylinders, the outputs and load conditions for each cylinder may be equalized.

Furthermore, the common desired cylinder compression ratio for all cylinders may be determined in anticipation of the method step of selecting the cuff-ring, which is described in more detail later on. Specifically, in practice, although cuff-ring 22 provides a certain flexibility with respect to its volume affecting the actual cylinder compression ratio, the flexibility is not unlimited. Hence, the common cylinder compression ratio for all cylinders may be a relative optimum or compromise, which is actually reachable by the selectable cuff-rings. Still further, for reasons of cost-efficiency, merely a limited selection and/or adaption range of cuff-rings with different volumes may be provided, which may further influence the determination of the common desired cylinder compression ratio for all cylinders.

As one skilled in the art will appreciate, it is not required to provide the desired (common) cylinder compression ratio as such. Instead, a value indicative of the desired cylinder compression ratio may be sufficient. For example, said value may be a desired cylinder clearance volume and/or a desired displacement volume, which is the desired theoretical volume displaced by the piston between its travel from BDC to TDC. Additionally or alternatively, said value may be a desired distance between top face 12 of piston 3 and at least one of top face 19 of the cylinder 2 or cylinder liner 4, top face 9 of head gasket 8, and bottom face 18 of cylinder head 6. The desired distance may refer to a predetermined position of piston 3, for example at TDC or BDC.

The method further comprises arranging piston 3 in cylinder 2. In embodiments in which cylinder 2 comprises a cylinder liner 4 as depicted in the embodiment shown in Fig. 1, piston 3 is arranged in cylinder liner 4 of cylinder 2. Additionally, cylinder head 6 may be mounted to cover cylinder 2.

By arranging piston 3 in cylinder 2, it becomes possible to determine a value indicative of the actual cylinder compression ratio. Said actual cylinder compression ratio is that cylinder compression ratio, which is actually provided by piston 3 traveling in cylinder 2 from BDC to TDC. Hence, the actual cylinder compression ratio incorporates a number of tolerances and inaccuracies occurring during manufacturing and assembling of components of internal combustion engine 1. For example, said tolerances and inaccuracies may relate to manufacturing and assembling tolerances of piston 3, cylinder 2, cylinder liner 4, cylinder head 6, the connecting rod (not shown), the piston pin (not shown), the crankshaft (not shown) etc.

Again, as one skilled in the art will appreciate, it is not required to determine the actual cylinder compression ratio as such. Instead, a value indicative of the actual cylinder compression ratio may be sufficient. Preferably the value indicative of the actual cylinder compression ratio is respectively chosen in accordance with the value indicative of the desired cylinder compression ratio. For example, said value may be an actual cylinder clearance volume and/or an actual displacement volume, which is actually displaced by piston 3 between travel from BDC to TDC.

For determining the actual cylinder clearance volume and/or the actual displacement volume, piston 3 may be moved to a predetermined position in cylinder 2, for example TDC or BDC. Then, a fluid may be filled into cylinder 2, and the fluid amount of the fluid filled into cylinder 2 may be measured. Filling the fluid into cylinder 2 may be either performed with cylinder head 6 covering cylinder 2 or with dismounted cylinder head 6. If piston 3 is positioned at TDC, the fluid amount may indicate an actual cylinder clearance volume; or the fluid amount may indicate a sum of actual cylinder clearance volume and actual displacement volume if piston 3 is positioned at BDC. For example, the fluid may be a liquid such as water or the like.

Alternatively or additionally, the actual piston displacement volume may be determined as follows. Piston 3 may be moved to BDC, and a fluid may be filled into cylinder 2 until a filling level reaches a top end of cylinder 2. Thereafter, piston 3 is moved to TDC, and the overflowing fluid is collected and measured to indicate the actual cylinder displacement volume.

In some embodiments, the value indicative of the actual cylinder compression ratio may be an actual distance between top face 12 of piston 3 and at least one of top face 19 of cylinder 2 or cylinder liner 4, top face 9 of head gasket 8, and bottom face 18 of cylinder head 6. Again, the actual distance may refer to a predetermined position of piston 3, for example at TDC or BDC, into which piston 3 is moved before measuring the respective actual distance.

The actual distance may be measured with mounted or dismounted cylinder head 6. In case cylinder head 6 is dismounted, the respective actual distance may be measured, for example, with a (digital) micrometer. In case cylinder head 6 is mounted on top of cylinder 2, a measuring tool may be at least partly inserted into combustion chamber 10 of cylinder 2 via a passage provided in cylinder head 6, for example for mounting an ignition device.

The method further comprises determining a deviation between the value indicative of the desired cylinder compression ratio and the respective value indicative of the actual cylinder compression ratio defined by piston 3 arranged in cylinder 2.

A further method step is selecting cuff-ring 22 to be arranged in cylinder 2. Cuff-ring 22 is selected to provide a volume to adapt the actual cylinder compression ratio to reduce the deviation.

As already outlined above, cuff-ring 22 merely requires the presence of scraping edge 28 for scraping-off deposits. As a result, cuff-ring body 30 may be adapted as desired as long as mounting of cuff-ring 22 in liner recess 20 is still possible and scraping edge 28 is provided. The possible adaption of cuff-ring body 30 allows to adapt the actual cylinder clearance volume, and, thus, the actual cylinder compression ratio.

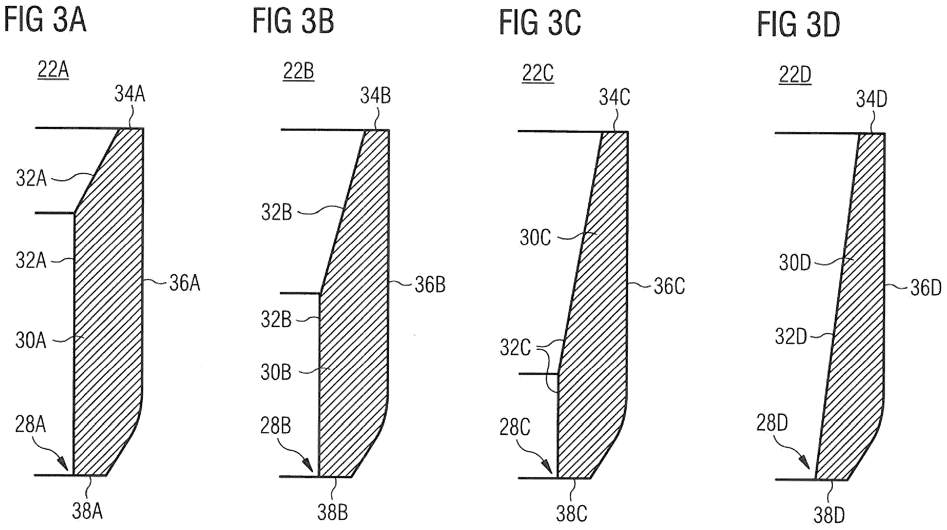

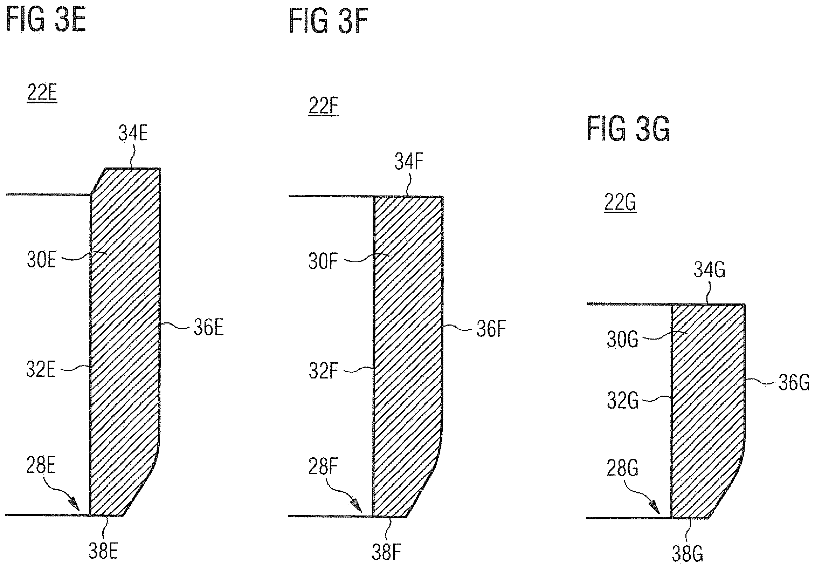

Referring now to Figs. 3A to 3F showing exemplary embodiments of cuff-rings 22A to 22G with different configurations and volumes. Specifically, Figs. 3A to 3F illustrate sectional views of different cuff-ring embodiments, wherein the sectional views illustrate detail "Y" as indicated in Fig. 2.

As can be seen, each cuff-ring 22A to 22F includes a scraping edge or face 28A to 28G for scraping-off deposits from piston 3 (see Fig. 1).

Cuff-rings 22A to 22F particularly differ with respect to a contour, inclination and surface area of inner circumferential face 32A to 32C. As a result, volumes of cuff-rings 22A to 22D successively decrease from cuff-ring body 30A to 30D.

Further examples of cuff-rings, not belonging to the invention, with different volumes affecting the actual cylinder compression ratio are provided by cuff-rings 22E to 22G. Those cuff-rings 22E to 22G include inner circumferential faces 32E to 32G (and outer circumferential faces 36E to 36G) with different surface areas. Again, as a result, volumes of cuff-rings 22E to 22G successively decrease from cuff-ring body 30E to 30G.

Different embodiments of cuff-rings may provide volumes that increase from one to another by factor 2 (decrease from one to another by factor 0.5), or even more. For example, cuff ring 22A may have a volume about twice a volume of cuff-ring 22D, and cuff-ring 22G may have a volume about half a volume of cuff-ring 22E.

As one skilled in the art will appreciate, individual features of any cuff-ring 22A to 22G may be combined to create a new cuff-ring including at least a scraping edge or face for scraping-off deposits, and providing a volume affecting the actual cylinder compression ratio as desired.

In the following, referring back to the method for adapting the cylinder compression ratio.

The method may further comprise providing a selection of a plurality of cuff-rings 22 having different volumes affecting the cylinder compression ratio. For example, Figs. 3A to 3G illustrate an exemplary selection of cuff-rings.

In case a selection of cuff-rings 22 is provided, the method step of selecting the cuff-ring 22 as noted above comprises selecting that cuff-ring 22 from the plurality of cuff-rings 22 for arranging in cylinder 2, which has the volume reducing the deviation most relative to the remaining cuff-rings of the plurality of cuff-rings 22.

In other words, in practice, a service technician may determine the deviation between the value indicative of the desired cylinder compression ratio and the respective value indicative of an actual cylinder compression ratio, and, based on that determination, select the most suitable cuff-ring from the selection of cuff-rings 22. As one skilled in the art will appreciate, the most suitable cuff-ring is that cuff-ring, which provides the volume that is most suitable for reducing (or even compensating) the deviation.

In some embodiments, the method is performed for a plurality of cylinders 2 of internal combustion engine 1. As one skilled in the art will appreciate, the actual cylinder compression ratio is then individually determined for each cylinder 2, because it is a cylinder-specific value depending on the specific tolerances and inaccuracies of the respective cylinder 2.

For example, the method may be carried out when the respective internal combustion engine is assembled for the first time, after a break-in period, and/or during overhaul. In the case of applying the method after a break in period or during overhaul of the internal combustion engine, the method may comprise replacing an already installed (and potentially worn) cuff-ring with the selected cuff-ring.

To facilitate both reducing and increasing the actual cylinder compression ratio by selecting a cuff-ring providing a desired volume, the determination of the actual cylinder compression ratio considers the actual presence of a cuff-ring, for example an old cuff-ring to be replaced during overhaul, or considers the theoretical presence of a (standard) cuff-ring with a (standard) known volume. Therefore, selecting and arranging the selected cuff-ring having the volume to adapt the actual cylinder compression ratio as desired should be understood as replacing a (theoretical) cuff-ring with the selected cuff-ring such that the cylinder clearance volume may be increased or reduced as desired. The reduction or increase is then dependent on the difference between the volume of the (theoretical) cuff-ring and the selected cuff-ring.

### Industrial Applicability

The method for adapting the compression ratio as disclosed herein is generally applicable to all kinds of internal combustion engines as replacing the deviations between actual and desired cylinder compression ratios is generally desirable. In particular, the method is applicable for adapting cylinder compression ratios of large-bore internal combustion engines having many cylinders, for example up to 16. The high number of cylinders might result in a relatively large mathematical spread of deviations causing a relatively large mathematical spread of cylinder outputs and load conditions.

Furthermore, the method is applicable to both newly assembled internal combustion engines and already existing internal combustion engines.

In practical implementations, different volumes of cuff-rings may allow to adapt actual cylinder compression ratios in the first position after the decimal point, for example about 0.5, or even higher, which may be sufficient for most deviations occurring in practice due to manufacturing and mounting tolerances and inaccuracies. In other words, the different body volumes provided by the different cuff-rings may allow to compensate a deviation between a desired cylinder compression ratio of 13.4 and an actual cylinder compression ratio of 13.9, or even higher deviations.

As a (highly-probable) result of carrying out the method, an internal combustion engine may comprise cuff-rings being associated with different three-dimensional shapes. For example, a first cuff-ring of a plurality of cuff-rings 22 and a second cuff-ring of the plurality of cuff-rings 22 may have different three-dimensional shapes such as depicted in Figs. 3A to 3G.

As used herein, the term "different three-dimensional shapes" refers to the original shape of the cuff-rings. As one skilled in the art will appreciate, it is not intended that microscopic distinctions due to, for example, manufacturing inaccuracies or wear of the cuff-rings are considered to fulfil the feature "different three-dimensional shape" as used in the present disclosure.

The reason for the different shapes may be that different cylinder specific deviations have to be reduced by the respective first and second cuff-ring volumes to reach a desired common cylinder compression ratio. As a result, the volume of the first cuff-ring may differ from the volume of the second cuff-ring.

Furthermore, inner circumferential faces 32, 36 facing combustion chamber 10 of the respective cylinder 2 may differ between the first cuff-ring and the second cuff-ring. For example, the respective faces may have different inclinations, contours (outlines), and surface areas.

As internal combustion engine 1 typically comprises equally-sized cylinders 2 (or cylinder liners 4) for receiving cuff-rings 22, the first cuff-ring and the second cuff-ring may have equal outer cuff-ring diameters, and the plurality of cylinders 2 (or cylinder liners 4) may have equal inner cylinder diameters.

Although the preferred embodiments of this invention have been described herein, improvements and modifications may be incorporated without departing from the scope of the following claims

## Claims

1. A method for adapting a cylinder compression ratio of an internal combustion engine (1) comprising a cylinder (2), a piston (3) and a cuff-ring (22) for scraping-off deposits from the piston (3), wherein a volume of the cuff-ring (22) affects the cylinder compression ratio, the method including:
providing a value indicative of a desired cylinder compression ratio;
arranging the piston (3) in the cylinder (2);
determining a deviation between the value indicative of the desired cylinder compression ratio and a respective value indicative of an actual cylinder compression ratio of the piston (3) arranged in the cylinder (2); and
selecting the cuff-ring (22), the cuff-ring (22) being selected from a plurality of cuff-rings (22), each comprising a scraping edge section (28) configured for contacting deposits on an outer circumferential face (14) of the piston (3) during operation of the internal combustion engine (1), **characterised in that** the plurality of cuff-rings (22) differ with respect to a contour, inclination and surface area of an inner circumferential face (32G), specifically to provide a volume to adapt the actual cylinder compression ratio to reduce the deviation.

2. The method of claim 1, further comprising:
providing a selection of a plurality of cuff-rings (22) having different volumes affecting the cylinder compression ratio; and
wherein the method step of selecting the cuff-ring (22) comprises selecting that cuff-ring (22) from the plurality of cuff-rings (22) for arranging in the cylinder (2), which has the volume reducing the deviation most relative to the remaining cuff-rings of the plurality of cuff-rings (22).

3. The method of claim 1 or 2, wherein:
the method steps are performed for a plurality of cylinders (2) of the internal combustion engine (1);
the desired cylinder compression ratio is a common desired compression ratio for the plurality of cylinders (2); and/or
the actual cylinder compression ratio is a cylinder-specific value for each individual cylinder of the plurality of cylinders (2).

4. The method of any one of the preceding claims, wherein the value indicative of the desired cylinder compression ratio and the respective value indicative of the actual cylinder compression ratio are:
a desired cylinder clearance volume and an actual cylinder clearance volume, respectively; and/or
a desired displacement volume and an actual displacement volume, respectively.

5. The method of any one of the preceding claims, further comprising determining the value indicative of the actual cylinder compression ratio of the piston (3) arranged in the cylinder (2).

6. The method of claim 5, wherein the method step of determining the value indicative of the actual cylinder compression ratio comprises:
moving the piston (3) into a predetermined position in the cylinder (2); and
measuring a distance between a top end face (12) of the piston (3) and at least one of a top face (19) of the cylinder (2), a top face (9) of a head gasket (8), and a bottom face (18) of a cylinder head (6) covering the cylinder (2).

7. The method of claim 5 or 6, wherein the method step of determining the value indicative of the actual cylinder compression ratio comprises:
moving the piston (3) into a predetermined position in the cylinder (2);
filling a fluid into the cylinder (2); and
measuring a fluid amount of the fluid filled into the cylinder (2).

8. The method of claim 6 or 7, wherein the predetermined position is a top dead center position or a bottom dead center position of the piston (3) in the cylinder (2).

9. The method of any one of claim 5 to 8, wherein the method step of determining the value indicative of the actual cylinder compression ratio is performed with a cylinder head (6) covering the cylinder (2).

10. An internal combustion engine (1), comprising:
a plurality of cylinders (2),
a plurality of pistons (3), each piston (3) being reciprocatingly arranged in one of the plurality of cylinders (2);
a plurality of cuff-rings (22), each cuff-ring (22) being arranged in one of the cylinders (2) for scraping-off deposits from the respective piston (3), and a first cuff-ring of the plurality of cuff-rings (22) and a second cuff-ring of the plurality of cuff-rings (22), the first cuff-ring and the second cuff-ring each comprise a scraping edge section (28) configured for contacting deposits on an outer circumferential face (14) of the piston (3) during operation of the internal combustion engine (1), **characterised in that** the plurality of cuff-rings (22) differ with respect to a contour, inclination and surface area of an inner circumferential face (32G), such that they are associated with a different three-dimensional shape.

11. The internal combustion engine (1) of claim 10, wherein the different three-dimensional shapes provide different volumes for affecting the cylinder compression ratio.

12. The internal combustion engine (1) of any one of claims 10 to 11, wherein each cylinder (2) comprises a cylinder liner (4), and the cuff-rings (22) are arranged in the cylinder liners (4).

13. The internal combustion engine (1) of any one of claims 10 to 12, wherein:
the first cuff-ring and the second cuff-ring have equal outer cuff-ring diameters; and/or
the plurality of cylinders (2) has equal inner cylinder diameters.

## Patentansprüche

1. Verfahren zum Anpassen eines Zylinderverdichtungsverhältnisses einer Brennkraftmaschine (1), die einen Zylinder (2), einen Kolben (3) und einen Manschettenring (22) zum Abstreifen von Ablagerungen von dem Kolben (3) umfasst, wobei ein Volumen des Manschettenrings (22) das Zylinderverdichtungsverhältnis beeinflusst, wobei das Verfahren einschließt:
Bereitstellen eines Werts, der ein gewünschtes Zylinderverdichtungsverhältnis angibt;
Anordnen des Kolbens (3) im Zylinder (2);
Bestimmen einer Abweichung zwischen dem Wert, der das gewünschte Zylinderverdichtungsverhältnis angibt, und einem jeweiligen Wert, der ein tatsächliches Zylinderverdichtungsverhältnis des Kolbens (3) angibt, der in dem Zylinder (2) angeordnet ist; und
Auswählen des Manschettenrings (22), wobei der Manschettenring (22) aus einer Vielzahl von Manschettenringen (22) ausgewählt wird, die jeweils einen Abstreifkantenabschnitt (28) umfassen, der zum Kontaktieren von Ablagerungen auf einer Außenumfangsfläche (14) des Kolbens (3) während des Betriebs der Brennkraftmaschine (1) konfiguriert ist, **dadurch gekennzeichnet, dass** sich die Vielzahl von Manschettenringen (22) hinsichtlich einer Kontur, Neigung und Oberfläche einer Innenumfangsfläche (32G) unterscheidet, insbesondere, um ein Volumen bereitzustellen, um das tatsächliche Zylinderverdichtungsverhältnis so anzupassen, dass die Abweichung reduziert wird.

2. Verfahren nach Anspruch 1, ferner umfassend:
Bereitstellen einer Auswahl einer Vielzahl von Manschettenringen (22) mit unterschiedlichen Volumina, die das Zylinderverdichtungsverhältnis beeinflussen; und
wobei der Verfahrensschritt des Auswählens des Manschettenrings (22) das Auswählen desjenigen Manschettenrings (22) aus der Vielzahl von Manschettenringen (22) zur Anordnung in dem Zylinder (2) umfasst, der das die Abweichung gegenüber den übrigen Manschettenringen der Vielzahl von Manschettenringen (22) am stärksten verringernde Volumen aufweist.

3. Verfahren nach Anspruch 1 oder 2, wobei:
die Verfahrensschritte für eine Vielzahl von Zylindern (2) der Brennkraftmaschine (1) durchgeführt werden;
das gewünschte Zylinderverdichtungsverhältnis ein gemeinsames gewünschtes Verdichtungsverhältnis für die Vielzahl von Zylindern (2) ist; und/oder
das tatsächliche Zylinderverdichtungsverhältnis ein zylinderspezifischer Wert für jeden einzelnen Zylinder der Vielzahl von Zylindern (2) ist.

4. Verfahren nach einem der vorhergehenden Ansprüche, wobei der Wert, der das gewünschte Zylinderverdichtungsverhältnis angibt, und der jeweilige Wert, der das tatsächliche Zylinderverdichtungsverhältnis angibt, Folgendes sind:
ein gewünschtes Zylindertotvolumen bzw. ein tatsächliches Zylindertotvolumen; und/oder
ein gewünschtes Verdrängungsvolumen bzw. ein tatsächliches Verdrängungsvolumen.

5. Verfahren nach einem der vorhergehenden Ansprüche, ferner umfassend das Bestimmen des Werts, der das tatsächliche Zylinderverdichtungsverhältnis des in dem Zylinder (2) angeordneten Kolbens (3) angibt.

6. Verfahren nach Anspruch 5, wobei der Verfahrensschritt des Bestimmens des Werts, der das tatsächliche Zylinderverdichtungsverhältnis angibt, umfasst:
Bewegen des Kolbens (3) in eine vorgegebene Position in dem Zylinder (2); und
Messen eines Abstands zwischen einer oberen Endfläche (12) des Kolbens (3) und mindestens einer Oberseite (19) des Zylinders (2) und/oder einer Oberseite (9) einer Kopfdichtung (8) und/oder einer Unterseite (18) eines Zylinderkopfs (6), der den Zylinder (2) bedeckt,

7. Verfahren nach Anspruch 5 oder 6, wobei der Verfahrensschritt des Bestimmens des Werts, der das tatsächliche Zylinderverdichtungsverhältnis angibt, umfasst:
Bewegen des Kolbens (3) in eine vorgegebene Position in dem Zylinder (2);
Füllen des Zylinders (2) mit einem Fluid; und
Messen einer Fluidmenge des in den Zylinder (2) eingefüllten Fluids.

8. Verfahren nach Anspruch 6 oder 7, wobei die vorgegebene Position eine obere Totpunktposition oder eine untere Totpunktposition des Kolbens (3) in dem Zylinder (2) ist.

9. Verfahren nach einem der Ansprüche 5 bis 8, wobei der Verfahrensschritt des Bestimmens des Wertes, der das tatsächliche Zylinderverdichtungsverhältnis angibt, mit einem Zylinderkopf (6) durchgeführt wird, der den Zylinder (2) abdeckt.

10. Brennkraftmaschine (1), umfassend:
eine Vielzahl von Zylindern (2),
eine Vielzahl von Kolben (3), wobei jeder Kolben (3) hin- und hergehend in einem der Vielzahl von Zylindern (2) angeordnet ist;
eine Vielzahl von Manschettenringen (22), wobei jeder Manschettenring (22) in einem der Zylinder (2) zum Abstreifen von Ablagerungen von dem jeweiligen Kolben (3) angeordnet ist, und einen ersten Manschettenring der Vielzahl von Manschettenringen (22) und einen zweiten Manschettenring der Vielzahl von Manschettenringen (22), wobei der erste Manschettenring und der zweite Manschettenring jeweils einen Abstreifkantenabschnitt (28) aufweisen, der zum Kontaktieren von Ablagerungen an einer Außenumfangsfläche (14) des Kolbens (3) während des Betriebs der Brennkraftmaschine (1) ausgebildet ist, **dadurch gekennzeichnet, dass** sich die Vielzahl von Manschettenringen (22) hinsichtlich Kontur, Neigung und Oberfläche einer Innenumfangsfläche (32G) unterscheiden, sodass sie einer unterschiedlichen dreidimensionalen Form zugeordnet sind.

11. Brennkraftmaschine (1) nach Anspruch 10, wobei die unterschiedlichen dreidimensionalen Formen unterschiedliche Volumina zum Beeinflussen des Zylinderverdichtungsverhältnisses bereitstellen.

12. Brennkraftmaschine (1) nach einem der Ansprüche 10 bis 11, wobei jeder Zylinder (2) eine Zylinderlaufbuchse (4) umfasst und die Manschettenringe (22) in den Zylinderlaufbuchsen (4) angeordnet sind.

13. Brennkraftmaschine (1) nach einem der Ansprüche 10 bis 12, wobei:
der erste Manschettenring und der zweite Manschettenring gleiche Manschettenringaußendurchmesser aufweisen; und/oder
die Vielzahl von Zylindern (2) gleiche Zylinderinnendurchmesser aufweist.

## Revendications

1. Procédé d'adaptation d'un taux de compression de cylindre d'un moteur à combustion interne (1) comprenant un cylindre (2), un piston (3) et un segment à manchette (22) pour racler des dépôts du piston (3), dans lequel un volume du segment à manchette (22) affecte le taux de compression de cylindre, le procédé incluant :
la fourniture d'une valeur indicative d'un taux de compression de cylindre souhaité ;
l'agencement du piston (3) dans le cylindre (2) ;
la détermination d'une déviation entre la valeur indicative du taux de compression de cylindre souhaité et une valeur respective indicative d'un taux de compression de cylindre réel du piston (3) agencé dans le cylindre (2) ; et
la sélection du segment à manchette (22), le segment à manchette (22) étant sélectionné parmi une pluralité de segments à manchette (22), comprenant chacun une section de bord racleur (28) configurée pour venir en contact avec des dépôts sur une face circonférentielle externe (14) du piston (3) pendant le fonctionnement du moteur à combustion interne (1), **caractérisé en ce que** la pluralité de segments à manchette (22) diffèrent par rapport à un contour, une inclinaison et une superficie d'une face circonférentielle interne (32G), spécifiquement pour fournir un volume pour adapter le taux de compression de cylindre réel pour réduire la déviation.

2. Procédé selon la revendication 1, comprenant en outre :
la fourniture d'une sélection d'une pluralité de segments à manchette (22) ayant des volumes différents affectant le taux de compression de cylindre ; et
dans lequel l'étape de procédé de sélection du segment à manchette (22) comprend la sélection de ce segment à manchette (22) parmi la pluralité de segments à manchette (22) pour agencement dans le cylindre (2), qui a le volume réduisant le plus la déviation par rapport aux segments à manchette restants de la pluralité de segments à manchette (22).

3. Procédé selon la revendication 1 ou 2, dans lequel :
les étapes de procédé sont mises en œuvre pour une pluralité de cylindres (2) du moteur à combustion interne (1) ;
le taux de compression de cylindre souhaité est un taux de compression commun souhaité pour la pluralité de cylindres (2) ; et/ou
le taux de compression de cylindre réel est une valeur spécifique au cylindre pour chaque cylindre individuel de la pluralité de cylindres (2).

4. Procédé selon l'une quelconque des revendications précédentes, dans lequel la valeur indicative du taux de compression de cylindre souhaité et la valeur respective indicative du taux de compression de cylindre réel sont :
un volume souhaité de jeu de cylindre et un volume réel de jeu de cylindre, respectivement ; et/ou
un volume de déplacement souhaité et un volume de déplacement réel, respectivement.

5. Procédé selon l'une quelconque des revendications précédentes, comprenant en outre la détermination de la valeur indicative du taux de compression de cylindre réel du piston (3) agencé dans le cylindre (2).

6. Procédé selon la revendication 5, dans lequel l'étape de procédé de détermination de la valeur indicative du taux de compression de cylindre réel comprend ;
le déplacement du piston (3) à une position prédéterminée dans le cylindre (2) ; et
la mesure d'une distance entre une face d'extrémité supérieure (12) du piston (3) et au moins l'une parmi une face supérieure (19) du cylindre (2), une face supérieure (9) d'un joint de culasse (8), et une face inférieure (18) d'une culasse de cylindre (6) couvrant le cylindre (2).

7. Procédé selon la revendication 5 ou 6, dans lequel l'étape de procédé de détermination de la valeur indicative du taux de compression de cylindre réel comprend :
le déplacement du piston (3) à une position prédéterminée dans le cylindre (2) ;
le remplissage d'un fluide dans le cylindre (2) ; et
la mesure d'une quantité de fluide du fluide rempli dans le cylindre (2).

8. Procédé selon la revendication 6 ou 7, dans lequel la position prédéterminée est une position de point mort haut ou une position de point mort bas du piston (3) dans le cylindre (2).

9. Procédé selon l'une quelconque parmi la revendication 5 à 8, dans lequel l'étape de procédé de détermination de la valeur indicative du taux de compression de cylindre réel est mise en œuvre avec une culasse de cylindre (6) couvrant le cylindre (2).

10. Moteur à combustion interne (1), comprenant :
une pluralité de cylindres (2),
une pluralité de pistons (3), chaque piston (3) étant agencé de manière alternative dans l'un parmi la pluralité de cylindres (2) ;
une pluralité de segments à manchette (22), chaque segment à manchette (22) étant agencée dans l'un des cylindres (2) pour racler des dépôts du piston respectif (3), et un premier segment à manchette de la pluralité de segments à manchette (22) et un deuxième segment à manchette de la pluralité de segments à manchette (22), le premier segment à manchette et le deuxième segment à manchette comprennent chacun une section de bord racleur (28) configurée pour venir en contact avec des dépôts sur une face circonférentielle externe (14) du piston (3) pendant le fonctionnement du moteur à combustion interne (1), **caractérisé en ce que** la pluralité de segments à manchette (22) diffèrent par rapport à un contour, une inclinaison et une superficie d'une face circonférentielle interne (32G), de telle sorte qu'elles sont associées à une forme tridimensionnelle différente.

11. Moteur à combustion interne (1) selon la revendication 10, dans lequel les formes tridimensionnelles différentes fournissent des volumes différents pour affecter le taux de compression de cylindre.

12. Moteur à combustion interne (1) selon l'une quelconque des revendications 10 à 11, dans lequel chaque cylindre (2) comprend une chemise de cylindre (4), et les segments à manchette (22) sont agencés dans les chemises de cylindre (4).

13. Moteur à combustion interne (1) selon l'une quelconque des revendications 10 à 12, dans lequel :
le premier segment à manchette et le deuxième segment à manchette ont des diamètres externes de segment à manchette égaux ; et/ou
la pluralité de cylindres (2) a des diamètres internes de cylindre égaux.
